# FASCICULE DE BREVET EUROPEEN

(11) **EP 3 028 855 B1**
(45) Date de publication et mention de la délivrance du brevet: **14.06.2017**
(21) Numéro de dépôt: 15197181.9
(22) Date de dépôt: 01.12.2015
(51) Int. Cl.: B32B 37/10, B30B 5/02, H01Q 21/00, B32B 33/00, B29C 70/88

(54) **PROCÉDÉ DE FABRICATION D'UN COMPOSANT COMPORTANT UN EMPILEMENT D'UNE COUCHE FONCTIONNELLE SUR UN FILM COMPOSITE**
HERSTELLUNGSVERFAHREN EINER KOMPONENTE, DIE EINE STAPELSCHICHT EINER FUNKTIONELLEN SCHICHT AUF EINER VERBUNDFOLIE UMFASST
METHOD FOR MANUFACTURING A COMPONENT COMPRISING A STACK OF A FUNCTIONAL LAYER ON A COMPOSITE FILM

(30) Priorité: 04.12.2014 FR 1461939
(43) Date de publication de la demande: 08.06.2016
(73) Titulaire: Commissariat à l'Énergie Atomique et aux Énergies Alternatives, 75015 Paris (FR); Centre National de la Recherche Scientifique, 75016 Paris (FR); Université Grenoble I Joseph Fourier, 38041 Saint Martin-d'Hères (FR)
(72) Inventeur: VIALA, Bernard, 38360 Sassenage (FR); TAKACS, Hélène, 38000 Grenoble (FR); TORTAI, Jean-Hervé, 38700 La Tronche (FR)
(74) Mandataire: GIE Innovation Competence Group

(56) Documents cités:
- EP-A1- 1 622 437
- US-A1- 2003 159 608
- H. TAKACS ET AL: "Structural, magnetic and dielectric properties of non conducting nanocomposites for RF applications", 2014 10TH CONFERENCE ON PH.D. RESEARCH IN MICROELECTRONICS AND ELECTRONICS (PRIME), 1 juin 2014 (2014-06-01), pages 1-4, XP055216057, DOI: 10.1109/PRIME.2014.6872753 ISBN: 978-1-47-994994-6

## Description

L'invention concerne un procédé de fabrication d'un composant comportant un empilement d'une couche fonctionnelle sur un film composite. L'invention concerne également un appareil conçu spécialement pour la mise en oeuvre de ce procédé de fabrication.

Typiquement, un film composite comporte une matrice en polymère thermoplastique à l'intérieur de laquelle sont dispersées des particules conférant à ce film composite des propriétés physiques indispensables au fonctionnement du composant. L'exo-diamètre des particules est compris entre 1 nm et 100 µm et le volume des particules à l'intérieur du film composite représentant plus de 1 %, et avantageusement plus de 10%, du volume de ce film composite. Par la suite, on parle de « nanoparticules » lorsque ces particules dispersées à l'intérieur de la matrice ont un exo-diamètre compris entre 1 nm et 1 µm.

Des procédés connus de fabrication de tels composants comportent :
a) le dépôt du film composite directement sur un substrat rigide dont l'épaisseur est strictement supérieure à l'épaisseur du film, le film composite présentant alors une face extérieure tournée du côté opposé au substrat, à ce stade, la température du film composite étant inférieure à sa température de transition vitreuse, de sorte que ce film est dit « dur », puis
b) le dépôt de la couche fonctionnelle directement sur la face extérieure du film composite.

Jusqu'à présent, il s'est avéré très difficile de fabriquer avec les procédés connus un tel composant de bonne qualité. En effet, par exemple, l'adhérence de la couche fonctionnelle sur le film composite s'avère être souvent de mauvaise qualité et très difficile à réaliser. La couche fonctionnelle déposée sur le substrat peut aussi être défectueuse. Par exemple, sa résistivité est trop élevée ou sa densité trop faible. Cela conduit à la réalisation de nombreux composants non fonctionnels ou défectueux.

L'état de la technique connu comporte notamment l'article suivant des inventeurs, appelé par la suite « article A1 » : H. Takacs et AL, « Structural, magnetic and dielectric properties of non conducting nanocomposites for RF applications », Microelectronics and Electronics (PRIME), 2014 10th Conference on Ph.D. Research, IEEE 2014.

De l'état de la technique est également connu de EP1622437A1.

L'invention vise à remédier à cet inconvénient en proposant un procédé de fabrication d'un tel composant qui limite le nombre de composants défectueux sans complexifier exagérément le procédé de fabrication.

Elle a donc pour objet un tel procédé de fabrication conforme à la revendication 1.

Les déposants ont découvert qu'une grande partie des problèmes d'adhésion et de défectuosité de la couche fonctionnelle sur le film composite provient du fait que la face extérieure de ce film composite est trop rugueuse et pas assez plane.

Ils ont aussi constaté qu'il n'existait pas de procédé efficace et simple pour planariser, c'est-à-dire améliorer la planéité, de la face extérieure d'un film composite telle que ceux utilisés ici. Plus précisément, les procédés classiques de polissage, tels que le polissage mécanique ou physico-chimique, ne marchent pas. En effet, dans les films composites utilisés, la dureté de la matrice est différente de la dureté des particules. Par exemple, la dureté de la matrice est inférieure à la dureté des particules. Par conséquent, l'amincissement du film composite ne se produit pas à la même vitesse dans les zones de la face extérieure où des particules affleurent à la surface que dans les zones de la face extérieure où aucune particule n'affleure. Ainsi, les procédés classiques de polissage n'améliorent pas la planéité de la face extérieure, voire même détériorent encore plus cette planéité.

Le procédé ci-dessus exploite donc la découverte de l'origine des problèmes d'adhésion et de défectuosité de la couche fonctionnelle sur le film composite. Dès lors, dans le procédé ci-dessus, la planéité de la face extérieure du film composite est améliorée avant de déposer la couche fonctionnelle. Cela améliore grandement l'adhérence de cette couche fonctionnelle sur le film composite. On obtient ainsi des composants de bonne qualité comportant chacun un empilement d'une couche fonctionnelle sur un film composite.

Dans le procédé revendiqué la méthode pour améliorer la planéité de la face extérieure du film composite est simple et efficace. En effet, le fait d'utiliser une membrane flexible poussée par un fluide garantit que la pression exercée par la membrane sur le film composite est uniformément répartie sur toute sa face extérieure. Cela permet aussi d'obtenir un parallélisme parfait entre la face extérieure et le plan du substrat. Ces caractéristiques du procédé de fabrication permettent de diminuer encore plus la rugosité de la face extérieure du film composite et donc d'accroître très nettement sa planéité.

L'utilisation de la membrane flexible poussée contre le film composite permet aussi d'appliquer ce procédé même si la surface de la face extérieure du film composite est grande. Par surface « grande » on désigne ici une surface au moins supérieure à 50 cm² ou 900 cm², et pouvant être supérieure à 0,3 m² ou 1 m². Ainsi, le domaine d'application de ce procédé est très étendu.

Enfin, après avoir imaginé le procédé ci-dessus, les déposants ont découvert que la machine nécessaire pour écraser la face extérieure du film composite se rapproche de la machine de micro-tamponnage décrite dans la demande US2003/0159608. À ce sujet, les déposants soulignent que la demande US2003/0159608 décrit une machine conçue pour structurer un masque utilisé pour réaliser de la lithographie. Plus précisément, cette demande de brevet décrit comment volontairement créer des empreintes et des aspérités dans une face extérieure du masque. La demande US2003/0159608 décrit donc une machine utilisée dans un but opposé à celui qui consiste à améliorer la planéité d'une face extérieure. De plus, la demande US2003/0159608 ne traite pas des films composites mais uniquement d'un masque en résine dépourvu de particule. Dans ces conditions, un homme du métier qui aurait cherché un procédé pour améliorer la planéité de la face extérieure du film composite ne pouvait pas trouver, sans effort inventif, ce document. De plus, avant qu'un homme du métier se mette à chercher un procédé pour améliorer la planéité de la face extérieure du film composite, il aurait fallu qu'il sache qu'il y avait un intérêt à faire cela. Or justement, le fait que les défauts de planéité de la face extérieure des films composites soient la cause des problèmes d'adhérence et de défectuosité de la couche fonctionnelle fait seulement partie des connaissances personnelles des inventeurs et non pas de celles de l'homme du métier.

Les modes de réalisation du procédé de fabrication ci-dessus peuvent comporter une ou plusieurs des caractéristiques des revendications dépendantes.

Ces modes de réalisation du procédé de fabrication présentent en outre les avantages suivants :
- Utiliser une face lisse dont la rugosité RMS (Root Mean Square) est inférieure à l'exo-diamètre moyen des particules permet d'améliorer la planéité du film composite.
- Utiliser une membrane dont la surface de la face avant est supérieure à 20 cm² permet d'appliquer le procédé ci-dessus à des films composites de dimension macroscopique.
- Utiliser des particules conductrices enveloppées dans une enveloppe en polymère thermoplastique et un substrat ayant des zones conductrices et isolantes contiguës permet de réaliser simplement un support à fort contraste d'impédance.

Un composant obtenu à partir du procédé de fabrication revendiqué est également divulgué. Ce composant comporte :
- un empilement d'une couche fonctionnelle sur un film composite, le film composite comportant une matrice en polymère thermoplastique à l'intérieur de laquelle sont dispersées des particules conférant à ce film composite des propriétés physiques indispensables au fonctionnement du composant, l'exo-diamètre des particules étant compris entre 1 nm et 100 µm et le volume des particules à l'intérieur du film composite représentant plus de 1 % du volume de ce film composite, et
- un substrat rigide dont l'épaisseur est strictement supérieure à l'épaisseur du film composite, le film composite étant directement déposé sur une face de ce substrat rigide,
dans lequel la face du film composite sur laquelle est déposée la couche fonctionnelle est lisse, c'est-à-dire que sa rugosité RMS (Root Mean Square) est inférieure à 100 nm.

Les modes de réalisation de ce composant peuvent comporter une ou plusieurs des caractéristiques suivantes :
▪ - la face avant du substrat rigide comporte au moins une zone conductrice et au moins une zone isolante, chaque zone conductrice étant réalisée dans un matériau électriquement conducteur et chaque zone isolante étant réalisée dans un matériau électriquement isolant, et
   - le film composite comprend entre 10 % et 90 % en volume de particules conductrices, chaque particule conductrice étant réalisée en matériau électriquement conducteur et présentant un exo-diamètre trois fois plus petit que l'épaisseur du film composite et un indice de forme compris entre 0,5 et 1,5, ce film composite comportant des chaînes de particules conductrices qui relient électriquement la face extérieur du film composite et ladite au moins une zone conductrice du substrat de manière à ce que le film composite soit électriquement conducteur dans une direction perpendiculaire à sa face extérieur et ce film composite étant dépourvu de chaîne de particules conductrices qui traversent de part en part le film composite parallèlement à sa face extérieure de manière à ce que le film composite soit électriquement isolant dans toutes les directions parallèles à sa face extérieure, chaque chaîne de particules conductrices étant formées de particules conductrices mécaniquement et électriquement en contact les unes avec les autres ;
▪ chaque zone conductrice est réalisée en métal inoxydable tel que du platine ou de l'or.

Un appareil d'écrasement de la face extérieure d'un film composite spécialement destiné à la mise en oeuvre du procédé ci-dessus de fabrication est aussi divulgué. Cet appareil comporte :
- un réservoir apte à contenir un fluide, ce réservoir comportant des parois rigides qui délimitent une ouverture,
- une membrane flexible obturant l'ouverture du réservoir de façon étanche au fluide lorsqu'elle est dans une position montée, cette membrane présentant dans cette position montée une face avant et du côté opposé, une face arrière, l'ensemble de la face arrière affleurant l'intérieur du réservoir,
- un support comportant une face de réception du film composite en vis-à-vis de l'ouverture, l'un du support et de la membrane étant déplaçable de façon réversible entre :
   - une position rétractée, dans laquelle le film composite peut être introduit entre l'ouverture et la face de réception, et
   - une position active dans laquelle la face avant de la membrane dans sa position montée est directement en appui sur la face extérieure du film composite et écrase cette face extérieure lorsque sa face arrière est poussée par le fluide contenu dans le réservoir,
dans lequel la face avant de la membrane comporte une face lisse d'au moins 20 cm² directement exposée à l'extérieur du réservoir, cette face lisse présentant uniquement des aspérités aléatoirement réparties sur toute sa surface et la rugosité RMS de cette face lisse est inférieure à 1 µm et, de préférence, inférieure à 100 nm et 10 nm.

Les modes de réalisation de l'appareil ci-dessus peuvent comporter une ou plusieurs des caractéristiques suivantes :
▪ la membrane comporte :
   - une feuille en matériau polymère présentant une face arrière qui forme la face arrière de la membrane et, du côté opposé, une face avant, et
   - un tampon fixé sur la face avant de la feuille en matériau polymère, ce tampon comportant la face lisse ;
▪ l'appareil comporte un élément chauffant apte à chauffer le film composite au-delà de la température de transition vitreuse de sa matrice lorsque le film composite se trouve sur la face de réception ;
▪ l'appareil comporte un compresseur apte à comprimer un fluide à l'intérieur du réservoir pour pousser la face lisse de la membrane contre la face extérieure du film composite.

L'invention sera mieux comprise à la lecture de la description qui va suivre, donnée uniquement à titre d'exemple non limitatif et faite en se référant aux dessins sur lesquels :
- la figure 1 est une illustration schématique d'un composant comportant un empilement d'une couche fonctionnelle sur un film composite ;
- la figure 2 est une illustration schématique d'un appareil d'écrasement utilisé pour fabriquer le composant de la figure 1 ;
- la figure 3 est une illustration schématique et en coupe verticale d'une membrane flexible de l'appareil de la figure 2 ;
- la figure 4 est un organigramme d'un procédé de fabrication du composant de la figure 1 ;
- la figure 5 est une photo, en noir et blanc, d'une coupe verticale d'un film composite déposé sur un substrat avant planarisation ;
- la figure 6 est une illustration schématique de l'appareil de la figure 2 dans une position active ;
- la figure 7 est une photo d'une coupe verticale d'un film composite du composant de la figure 1 après planarisation ;
- la figure 8 est une illustration schématique, en coupe verticale, d'un autre mode de réalisation de la membrane de la figure 3 ;
- les figures 9 et 11 sont des illustrations schématiques partielles, en coupe verticale, d'autres modes de réalisation de composants comportant chacun un empilement d'une couche fonctionnelle sur un film composite ; et
- la figure 10 est un organigramme d'un procédé de fabrication du composant de la figure 9.

Dans ces figures, les mêmes références sont utilisées pour désigner les mêmes éléments. Dans la suite de cette description, les caractéristiques et fonctions bien connues de l'homme du métier ne sont pas décrites en détail.

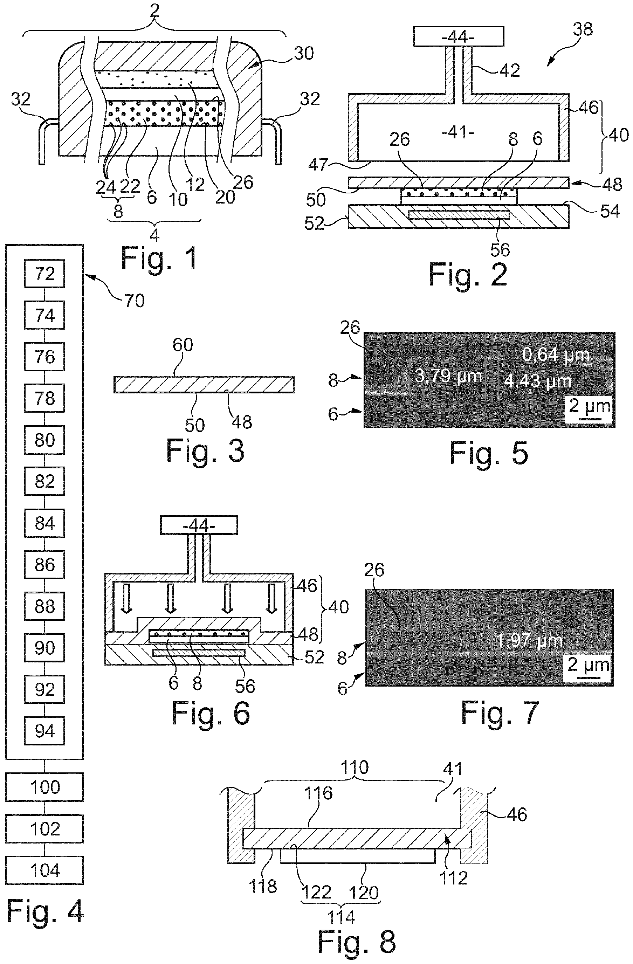

La figure 1 représente un composant 2. Ce composant 2 est un composant qui capte ou qui modifie ou qui émet un signal physique tel qu'un signal électromagnétique, optique ou électrique. Le composant 2 peut aussi traiter plusieurs des signaux précédemment décrits. La suite de cette description est faite dans le cas particulier où le composant 2 est un composant qui convertit un signal électromagnétique en un signal électrique.

Seules les caractéristiques du composant 2 pertinentes pour la description de son procédé de fabrication sont décrites ici. Ainsi, sa représentation graphique a été extrêmement simplifiée et les facteurs d'échelle n'ont pas été respectés dans la figure 1. De plus, sur la figure 1, les traits ondulés verticaux indiquent que des parties du composant 2 n'ont pas été représentées.

Le composant 2 comporte un empilement 4. Cet empilement 4 comporte successivement empilé les uns au-dessus des autres, dans la direction verticale et en allant du bas vers le haut :
- un substrat rigide 6,
- un film composite 8 directement déposé sur le substrat 6,
- une couche fonctionnelle 10 directement déposée sur le film composite 8, et
- une couche 12 de passivation déposée sur la couche fonctionnelle 10.

Par la suite, les termes « supérieur », « inférieur », « au-dessus », « en dessous », « haut », « bas » sont définis par rapport à la direction d'empilement, c'est-à-dire la direction perpendiculaire au plan dans lequel s'étend principalement le substrat 6. Ici la direction d'empilement est verticale.

Le substrat 6 s'étend principalement dans un plan horizontal. Son épaisseur est supérieure à l'épaisseur du film 8 et, généralement, supérieure à 10 µm ou 20 µm. Son module de Young à 20°C est généralement supérieur à 100 GPa. De plus, si le matériau du substrat 6 présente une température de transition vitreuse, alors celle-ci est supérieure d'au moins 50°C et, de préférence, plus de deux ou trois fois supérieure à celle de la matrice du film composite 8. De même, si le matériau du substrat 6 présente une température de fusion, celle-ci est très élevée, c'est-à-dire supérieure à 200°C ou 350°C.

Le substrat 6 présente une face supérieure 20 directement en contact mécanique avec la face inférieure du film 8. Ici, cette face 20 est plane et horizontale. Ici, la face 20 est hydrophile pour faciliter l'adhésion du film 8 sur cette face. De préférence, la face 20 est également lisse pour faciliter le dépôt du film 8. Dans cette description, par « lisse » on désigne une face dont la rugosité RMS (Root Mean Square) est au moins inférieure à 20 % ou 25 % de son épaisseur et, de préférence, inférieure à 1 µm et, de façon encore plus avantageuse, inférieure à 100 nm ou 50 nm ou 10 nm. La rugosité RMS est mesurée sur une surface de 100 µm² ou de 1 µm², à l'aide d'un microscope à force atomique, plus connu sous l'acronyme AFM (Atomic Force Microscopy) ou d'un profilomètre selon la hauteur des aspérités à mesurer.

Par exemple, le substrat 6 est un substrat en silicium dont la face supérieure 20 est constituée par une couche d'oxyde de silicium de 500 nm d'épaisseur.

Le film 8 recouvre la totalité de la face 20. Il est directement déposé sur la face 20. L'épaisseur du film 8 est typiquement comprise entre 100 nm et 10 µm et, de préférence, entre 100 nm et 3 µm. Ici, l'épaisseur du film 8 est égale à 2 µm à plus ou moins 20 % près.

Le film 8 comporte une matrice 22 en matériau polymère à l'intérieur de laquelle sont dispersées des nanoparticules 24. Pour simplifier la figure 1, la référence 24 est indiquée uniquement pour quelques-unes des nanoparticules représentées par des points noirs.

La matrice 22 remplit les interstices entre les nanoparticules 24 pour les lier mécaniquement entre elles. Cette matrice 22 est réalisée dans un matériau polymère thermoplastique qui présente une température de transition vitreuse T_{g}. Par exemple, la température T_{g} est supérieure ou égale à 30°C ou 50°C. La température de la matrice 22 est mesurée selon la méthode décrite dans le document suivant : « Standard Test Method for Assignment of the Glass Transition Temperatures by Differential Scanning Calorimetry or Differential Thermal Analysis » (ASTM E 1356-98).

Typiquement, la matrice 22 est réalisée dans un matériau électriquement isolant ou très faiblement conducteur et non magnétique. Par « électriquement isolant », on désigne dans cette description un matériau dont la résistivité électrique à 20°C est supérieure à 10⁶ Ω.m ou 10⁸ Ω.m ou 10¹⁰ Ω.m. Par « non magnétique », on désigne ici un matériau dépourvu de propriété magnétique mesurable. Ici, la matrice 22 est réalisée en polystyrène.

Les nanoparticules 24 confèrent au film 8 des propriétés physiques. En absence de ces nanoparticules, le film 8 serait dépourvu de ces propriétés physiques et le composant 2 ne fonctionnerait donc pas. Les propriétés physiques en question sont typiquement des propriétés magnétiques, optiques, électriques ou thermiques.

Dans ce mode de réalisation, les nanoparticules 24 sont des particules dont l'exo-diamètre est supérieur à 1 nm et, de préférence, supérieur à 5 nm ou 10 nm. La notion d'exo-diamètre est bien connue en granulométrie. On rappelle simplement ici que le «diamètre de Féret» (Df) est la plus petite distance entre une première droite donnée D1 et une seconde droite D2 parallèle à la droite D1. Ces droites D1 et D2 sont disposées de telle sorte que l'ensemble de la projection orthogonale de la particule dans le plan contenant ces deux droites parallèles soit comprise entre ces deux droites parallèles. De plus, ces deux droites D1 et D2 touchent chacune en au moins un point la périphérie de cette projection orthogonale de la particule. Si l'on fait tourner la droite D1 tout autour de la particule, on trouve une position de la droite D1 pour laquelle le diamètre Df est maximal. La valeur maximale du diamètre Df est l'exo-diamètre. La valeur minimale du diamètre Df est le méso-diamètre. Le rapport de la surface maximale de la projection de la particule sur la surface du cercle ayant un diamètre égal à l'exo-diamètre définit ce que l'on nomme l'indice de forme de la particule. La surface maximale de la projection de la particule est la surface de la projection orthogonale de la particule sur un plan, ce plan étant celui qui maximise cette surface.

L'exo-diamètre des nanoparticules est aussi strictement inférieur à l'épaisseur du film 8 et, de préférence, au moins deux ou trois fois inférieur à l'épaisseur du film 8. Typiquement, l'exo-diamètre des nanoparticules est inférieur à 1 µm et, généralement, inférieur à 150 nm. L'indice de forme des nanoparticules 24 est par exemple compris entre 0,5 et 1,5 et, souvent, compris entre 0,8 et 1,2. Ici, l'exo-diamètre des nanoparticules 24 est compris entre 20 et 50 nm et, par exemple, entre 20 et 30 nm.

Les nanoparticules 24 représentent plus de 1 % et, typiquement, plus de 10 % et, avantageusement, plus de 20 % ou 30 % ou 50 % du volume du film 8. Le pourcentage volumique des nanoparticules 24 dans le film 8 peut même dépasser 90 % selon les applications envisagées.

Dans cet exemple, toutes les nanoparticules 24 sont réalisées dans le même matériau. Ce matériau est différent de celui de la matrice 22 pour conférer les propriétés physiques souhaitées au film 8. Par exemple, les nanoparticules 24 sont ici réalisées en cobalt pour conférer des propriétés magnétiques au film 8. Dans ce cas, les nanoparticules 24 sont plus dures que la matrice 22.

Le film 8 présente une face plane supérieure 26 tournée vers le haut.

La couche fonctionnelle 10 est nécessaire au fonctionnement du composant 2 après que sa fabrication ait été terminée. Elle est déposée directement sur la face 26. Son épaisseur est typiquement comprise entre 100 nm et 10 µm et, de préférence, entre 100 nm et 3 µm. Ici, cette couche fonctionnelle 10 est structurée pour former un motif, tel qu'un ou plusieurs brins d'une inductance ou d'une antenne, sur la face 26. Ainsi, dans ce mode de réalisation, elle ne recouvre pas la totalité de la face 26. Dans cet exemple, la couche fonctionnelle 10 est un brin en or déposé sur le film 8.

La couche 12 est, par exemple directement, déposée sur la couche fonctionnelle 10 pour la passiver, c'est-à-dire l'empêcher de réagir avec des éléments extérieurs. Par exemple, la couche 12 empêche que la couche 10 s'oxyde.

Dans le cas particulier décrit ici, l'empilement 4 forme une antenne capable d'émettre ou de recevoir des ondes électromagnétiques par l'intermédiaire du brin en or.

L'empilement 4 est isolé mécaniquement de l'extérieur du composant 2 par une enveloppe protectrice 30 qui recouvre la majorité des faces de l'empilement 4. Ici, l'enveloppe protectrice 30 recouvre la face supérieure de l'empilement 4 et, éventuellement, aussi toutes les parois verticales de cet empilement 4. Elle est fixée sans aucun degré de liberté sur l'empilement 4. Par exemple, elle est collée sur cet empilement 4.

Cette enveloppe 30 est réalisée dans un matériau qui ne perturbe pas le fonctionnement de l'empilement 4. Ici l'enveloppe 30 est réalisée dans un matériau non magnétique et électriquement isolant comme par exemple une résine d'encapsulation (epoxy, silicone, vernis). De plus, pour remplir sa fonction protectrice, l'épaisseur de l'enveloppe 30 est généralement assez importante, c'est-à-dire supérieure ou égale à 10 µm ou 100 µm.

Enfin, le composant 2 a généralement besoin de communiquer ou d'échanger de l'énergie avec des équipements situés à l'extérieur de l'enveloppe 30. À cet effet, ici, il comporte des plots 32 de connexion par l'intermédiaire desquels il échange des informations et/ou de l'énergie avec cet équipement extérieur. Ces plots 32 sont fixés sans aucun degré de liberté sur la face extérieure de l'enveloppe 30. Par exemple, les plots 32 affleurent la face extérieure de l'enveloppe 30 ou font saillie au-delà de cette enveloppe 30.

Lorsque le signal échangé avec l'équipement extérieur est un signal électrique, ces plots 32 sont réalisés dans un matériau électriquement conducteur. Par « électriquement conducteur », on désigne dans cette description un matériau dont la résistivité électrique à 20°C est inférieure à 1,5*10⁻⁸ Ω.m ou 10⁻⁶ Ω.m. Lorsque les signaux échangés sont des signaux optiques, les plots 32 sont par exemple dans un matériau transparent aux longueurs d'ondes des signaux optiques échangés.

Ici, la figure 1 représente le cas où des signaux électriques sont échangés et les plots 32 sont représentés sous la forme de broches électriques. Par exemple, l'un de ces plots 32 est électriquement raccordé au brin en or formé par la couche 10.

Le composant 2 peut comporter d'autres empilements ou des puces électroniques à l'intérieur même de l'enveloppe protectrice 30. Toutefois, pour simplifier l'illustration, ceux-ci n'ont pas été représentés.

La figure 2 représente l'architecture d'un appareil 38 pour écraser la face 26 du film 8. Cet appareil 38 est structurellement proche de ceux décrits dans la demande US2003/0159608. Par conséquent, seules les différences entre l'appareil 38 et les appareils décrits dans cette demande US2003/0159608 sont décrits en détail.

L'appareil 38 comporte un réservoir 40 délimitant une cavité intérieure 41 apte à contenir un fluide comprimé tel qu'un gaz. L'intérieur de la cavité 41 est raccordé fluidiquement par un conduit 42 à un compresseur 44.

Le réservoir 40 comprend des parois rigides verticales 46 dont les bords inférieurs définissent une ouverture 47.

L'appareil 38 comprend aussi une membrane flexible 48 mécaniquement indépendante du réservoir 40.

La membrane 48 est déplaçable, de façon réversible, entre une position démontée (représentée sur la figure 2) et une position montée (représentée sur la figure 6). Dans la position démontée, la membrane 48 est mécaniquement séparée des bords inférieurs des parois 46 de sorte qu'elle n'obture pas de façon étanche l'ouverture 47. Ici, dans la position démontée, une face avant 50 de la membrane 48 repose librement directement sur la face 26 du film 8 sans la comprimer. Dans la position montée, la membrane 48 obture de façon étanche au fluide comprimé l'ouverture 47. Pour cela, dans ce mode de réalisation, la totalité de la périphérie de la membrane 48 est coincée entre les bords inférieurs du réservoir 40 et une face supérieure 54 d'un support plan 52 situé en vis-à-vis de l'ouverture 47. Ici, pour passer entre les positions démontée et montée, c'est l'ensemble du support 52 qui se déplace en translation verticale entre une position rétractée (représentée sur la figure 2) et une position active (représentée sur la figure 6). Dans la position rétractée, le jeu qui sépare la face 54 de l'ouverture 47 est suffisamment important pour permettre l'introduction et, en alternance, le retrait de l'empilement du film 8 et du substrat 6 entre cette face 54 et l'ouverture 47. Dans la position active, la face 54 comprime la périphérie de la membrane 48 sur les bords de l'ouverture 47 pour obturer cette ouverture de façon étanche au fluide comprimé. Lorsque le support 52 est dans sa position active, la membrane 48 est dans sa position montée.

La membrane 48 est décrite plus en détail en référence à la figure 3. La face 54 sert également de face de réception, tournée vers l'ouverture 47, sur laquelle est déposé un empilement du film 8 sur le substrat 6. De préférence, cet empilement est monté, sans aucun degré de liberté, sur la face 54 avant que la membrane 48 soit déposée dessus, puis démontée, après l'utilisation de l'appareil 38.

L'appareil 38 comporte un élément chauffant 56 apte à chauffer le film 8 au-delà de la température T_{g}. Ici, l'élément chauffant 56 est logé, à titre d'exemple, à l'intérieur du support 52 et sous la face 54.

La figure 3 représente la membrane 48. Cette membrane 48 comporte une face arrière 60 qui affleure entièrement à l'intérieur de la cavité 41 dans sa position montée. La face avant 50 est située du côté opposé à la face arrière 60. La face avant 50 est directement exposée à l'extérieur et vient directement en appui sur la face 26.

L'épaisseur de la membrane 48 est choisie suffisamment petite pour que, dans sa position montée, elle puisse se déformer uniformément quand un fluide comprimé est reçu à l'intérieur de la cavité 41. Typiquement, son épaisseur est inférieure à 1 mm et, avantageusement, inférieure à 500 µm ou 100 µm. Elle est réalisée dans un matériau lui permettant de se déformer au moins en flexion autour des points de sa périphérie coincés entre les bords inférieurs du réservoir 40 et la face 54. Typiquement, le module de Young à 25°C du matériau de la membrane 48 est inférieur à 3 GPa ou inférieur à 1 GPa. Ici, elle est réalisée dans un matériau polymère, tel qu'un élastomère.

La surface de la face 50 est ici supérieure à 20 cm² ou 50 cm², et typiquement supérieure ou égale à 100 cm² ou 500 cm². La surface de la face arrière 60 est égale à la surface de la face 50.

La face 50 est lisse. Ici, elle présente une rugosité inférieure ou égale à celle que l'on souhaite obtenir pour la face 26 du film 8. Généralement, la rugosité que l'on souhaite obtenir est inférieure à l'exo-diamètre moyen des nanoparticules 24 et, de préférence, deux ou trois ou dix fois inférieure à cet exo-diamètre moyen des nanoparticules 24. Par exemple, la rugosité RMS de la face 50 est inférieure à 10 µm et, généralement inférieure à 1 µm et, avantageusement, inférieure à 100 nm ou 50 nm ou 10 nm.

Quelle que soit la rugosité de la face 50, celle-ci est uniquement créée par des aspérités réparties aléatoirement sur toute cette face 50. Autrement dit, la face 50 n'est pas structurée et ne comporte pas de motif, par exemple régulier, gravé dans cette face 50.

La force d'adhérence de la face 50 sur la face 26 est strictement inférieure et, de préférence, au moins deux ou trois fois inférieure à la force d'adhérence du film 8 sur le substrat 6. Cela permet de ne pas arracher le film 8 lorsque la membrane 48 est déplacée de sa position active vers sa position rétractée.

À cet effet, par exemple, la face 50 est rendue hydrophobe. Pour cela, le matériau de la membrane 48 est par exemple un polymère hydrophobe ou au moins sa face avant 50 est réalisée dans ce matériau hydrophobe. Le matériau hydrophobe est par exemple un matériau comportant des groupements organiques fluorés, ou des silanes fluorés. Par exemple, il peut s'agir du téflon, du PLLA (Poly-L-Lactide Acid) ou du PVDF (polyfluorure de vinylidène).

Le matériau hydrophobe peut aussi être un matériau composite constitué d'une matrice dans laquelle sont dispersées des particules hydrophobes comme des particules de PTFE (polytétrafluoroéthylène) dispersées dans une matrice de NiP.

La face 50 peut aussi être rendue hydrophobe par greffage sur cette face, par exemple, de chaînes fluorées.

Ici, la totalité de la face 50 est hydrophobe.

La fabrication du composant 2 va maintenant être décrite en référence au procédé de la figure 4 et à l'aide des figures 5 à 7.

Le procédé de fabrication débute par une phase 70 de réalisation de l'empilement 4. Cette phase 70 comporte le dépôt 72 du film 8 sur la face 20 du substrat 6. Pour cela, on prépare une solution liquide contenant la matrice 22 et les nanoparticules 24 dans une proportion volumique connue qui conduira à la proportion volumique souhaitée pour la réalisation du film 8. Par exemple, on prépare une solution principalement constituée des nanoparticules 24, du polymère thermoplastique de la matrice 22 et d'un solvant dans lequel est dissout le polymère thermoplastique.

Ensuite, pour déposer le film 8 sur le substrat 6, on répartit la solution colloïdale sur la face supérieure 20 du substrat 6. Typiquement, cela est réalisé par enduction centrifuge plus connue sous le terme anglais de « spin coating ».

Après séchage, on obtient le film 8 déposé sur le substrat 6. À ce stade, la face extérieure du film 8 présente de nombreux défauts de planéité et une rugosité élevée. Typiquement, à ce stade, la rugosité RMS du film 8 est supérieure à cinq ou dix fois l'exo-diamètre moyen des nanoparticules 24.

La figure 5 représente une photo d'une coupe verticale du film 8 observé à l'aide d'un microscope électronique à balayage. Sur cette photo, on peut distinguer une aspérité d'environ 0,64 µm de hauteur. Ces aspérités sont aléatoirement réparties à la surface du film 8. Il semble qu'elle soit causée par des amas de nanoparticules 24 qui s'agglomèrent les unes aux autres lors de la réalisation du film 8. De plus, les défauts de planéité du film 8 sont aussi dus à des variations d'épaisseur de ce film. À ce stade de fabrication, il a été mesuré des écarts d'épaisseur du film 8 entre deux endroits différents pouvant atteindre et dépasser 1 µm. Ici, le film 8 présente donc une rugosité RMS supérieure à 1 µm.

Ensuite, lors d'une étape 74, l'empilement du film 8 sur le substrat 6 précédemment réalisé est placé sur la face 54 du support 52 en vis-à-vis de l'ouverture 47. Ensuite, la membrane 48 est déposée sur la face 26 du film 8. A ce stade, la membrane 48 est retenue sur la face 26 uniquement par gravité. La membrane 48 est alors dans sa position démontée. De même, à ce stade, la température du film 8 est égale à la température ambiante, c'est-à-dire inférieure à 25°C.

Lors d'une étape 76, le support 52 est déplacé de sa position rétractée vers sa position active et, en même temps, la membrane 48 passe de sa position démontée vers sa position montée. L'ouverture 47 est alors hermétiquement obturée par la membrane 48.

Lors d'une étape 78, le compresseur 44 comprime le fluide contenu à l'intérieur de la cavité 41 pour atteindre une pression strictement supérieure à la pression atmosphérique. Ici, il comprime le gaz, par exemple, à 6 bars (0,6 MPa). La membrane 48 se déforme alors et épouse complètement la forme du film 8 (figure 6). Sur cette figure 6, les flèches verticales à l'intérieur de la cavité 41 représentent la pression qui s'exerce sur la face arrière 60 de la membrane 48 et donc sur la face supérieure 26. Cette pression est uniformément répartie sur toute la face 26, et ceci quelle que soit sa surface, car elle est exercée par l'intermédiaire d'un fluide.

Lors d'une étape 80, l'élément chauffant 56 est commandé pour chauffer le film 8 au-delà de la température T_{g} et tout en restant en deçà de sa température de fusion. La température de chauffage reste également inférieure à la température de transition vitreuse des autres matériaux utilisés dans l'appareil 38, tels que ceux utilisés pour le substrat 6 ou la membrane 48. En réponse à ce chauffage, le film 8 se ramollit. Par exemple, la température de chauffage est prise égale à 120°C et est maintenue pendant 1 min.

Lors d'une étape 82, une fois que le film 8 est ramolli, le compresseur 44 augmente la pression du fluide contenu à l'intérieur de la cavité 41 tout en maintenant le film 8 au-delà de sa température T_{g}. Par exemple, lors de l'étape 82, la pression à l'intérieur de la cavité 41 passe à 40 bars (4 MPa). Cette pression est maintenue pendant 5 min. Ainsi, pendant l'étape 82 la face 50 de la membrane est écrasée contre la face 26 du film 8.

Lors d'une étape 84, l'élément chauffant 56 est commandé pour ramener la température du film 8 en dessous de la température T_{g}. Par exemple, l'élément chauffant 56 est éteint. Par conséquent, le film 8 durcit à nouveau dès que sa température redescend au-dessous de la température T_{g}.

Lors d'une étape 86, une fois que la température du film 8 est redescendue au-dessous de la température T_{g}, le compresseur 44 redescend la pression à l'intérieur de la cavité 41 jusqu'à revenir à la pression atmosphérique.

Lors d'une étape 88, une fois que la pression du gaz à l'intérieur de la cavité 41 est redevenue égale à la pression atmosphérique, le support 52 est déplacé vers sa position rétractée se qui déplace en même temps la membrane 48 vers sa position démontée. Ensuite, l'empilement du film 8 sur le substrat 6 est retiré du support 52. La membrane 48 est alors retirée, par exemple manuellement, ce qui sépare la face 50 de la face 26 du film 8.

À ce stade, la planéité de la face 26 du film 8 est considérablement améliorée. Par exemple, la rugosité de la face 26 est inférieure ou égale à 100 nm ou 50 nm. Ceci est représenté sur la photo de la figure 7. Cette photo est une coupe verticale du film 8 observé à l'aide d'un microscope électronique à balayage. Cette photo illustre le cas où la rugosité RMS de la face 26 obtenue est inférieure à 100 nm.

Ensuite, le procédé de réalisation de l'empilement 4 se poursuit par :
- le dépôt, lors d'une étape 90, de la couche fonctionnelle 10 directement sur la face 26 du film 8,
- la structuration, lors d'une étape 92, de la couche fonctionnelle 10 déposée pour former le brin de l'antenne, puis
- le dépôt, lors d'une étape 94, de la couche de passivation 12 sur la couche fonctionnelle 10 structurée.

Les étapes 90 et 92 sont réalisées selon des procédés classiques en microtechnologie de dépôt et/ou de structuration de couches. Par exemple, le dépôt est réalisé par pulvérisation ou électro-déposition. Puis, la structuration est réalisée par gravure sèche ou humide. Les étapes 90 et 92 peuvent aussi être réalisées à l'aide d'une imprimante à jet d'encre qui projette la couche 10 uniquement aux endroits souhaités sur la face 26. Dans ce cas, le dépôt et la structuration de la couche 10 ont lieu en même temps.

Malgré l'utilisation de procédé classique de dépôt de la couche fonctionnelle 10, celle-ci adhère très bien sur la face 26 du film 8 et offre des propriétés aptes au fonctionnement du composant 2 (par exemple une faible résistivité électrique), car la planéité de cette face est très bonne à ce stade-là.

La phase de réalisation de l'empilement 4 s'achève alors.

Cette phase 70 peut être suivie d'une ou plusieurs phases 100 de réalisation d'autres empilements, tels que l'empilement 4, ou d'une ou plusieurs puces électroniques.

Ensuite, le procédé se poursuit par une phase 102 de réalisation des plots 32 de connexion et de raccordement électrique de ces plots. Enfin, à l'issue de la phase 102, lors d'une phase 104, l'enveloppe protectrice 30 est réalisée. Par exemple, l'enveloppe 30 est réalisée par moulage d'un polymère thermodurcissable.

La figure 8 représente une membrane 110 apte à être utilisée à la place de la membrane 48. La membrane 110 comporte une feuille flexible 112 et un tampon 114. Dans ce mode de réalisation, la périphérie de la feuille 112 est ancrée, sans aucun degré de liberté, sur le bord inférieur de la paroi 46. La feuille 112 est flexible. Par exemple pour cela, elle est réalisée dans un matériau tel que l'un de ceux précédemment décrits pour la membrane 48. Cette feuille 112 présente une face arrière 116 qui affleure directement à l'intérieur de la cavité 41. La face 116 correspond à la face arrière de la membrane 110. Cette feuille 112 présente également une face avant 118 directement exposée à l'extérieur. Cette face 118 est en partie recouverte par le tampon 114 de sorte qu'elle est directement exposée à l'extérieur uniquement tout autour du tampon 114. Ainsi, la face extérieure 118 directement exposée à l'extérieur forme une couronne de matériau polymère autour du tampon 114. La forme de cette couronne peut être quelconque. Par exemple, la périphérie intérieure de cette couronne est carrée si la périphérie extérieure du tampon est carrée.

Le tampon 114 comporte une face avant 120 et une face arrière 122. Ces faces 120 et 122 sont parallèles et situées chacune d'un côté opposé. La face 122 est entièrement et directement en contact, sans aucun degré de liberté, avec la face avant 118 de la feuille 112. A cet effet, la face 122 est, par exemple, collée sur la face 118.

Seule la face avant 120 est destinée à venir directement en contact avec la face 26 lors de l'exécution du procédé de la figure 4. À cet effet, la face 120 est lisse. Par exemple, elle est au moins aussi lisse que la face 50 précédemment décrite. À l'inverse, la face 118 n'a pas besoin d'être lisse dans ce mode de réalisation.

La force d'adhésion entre la face 120 et la face 26 du film 8 est inférieure à la force d'adhésion de ce film 8 sur le substrat 6. À cet effet, ce qui a été décrit pour la face 50 s'applique à la face 120. Le tampon 114 permet de choisir un matériau lisse et non-adhérant au film 8 indépendamment de celui utilisé pour la feuille 112. On remarquera aussi que le pourtour de la face 118 directement exposée à l'extérieur n'a pas besoin de subir les mêmes traitements que la face 120 pour diminuer sa force d'adhésion sur le film 8.

Le tampon 114 peut être réalisé dans un matériau rigide ou non. Par exemple, le tampon 114 est réalisé en silicium. Son épaisseur est alors supérieure à 50 µm, par exemple supérieure à 500 µm ou 750 µm.

Le procédé de fabrication du composant 2 avec la membrane 110 est le même que celui de la figure 4 sauf que lorsque le support 52 se déplace vers sa position rétractée, cela provoque en même temps la séparation des faces 26 et 120 car la membrane 110 reste montée sur le réservoir 40.

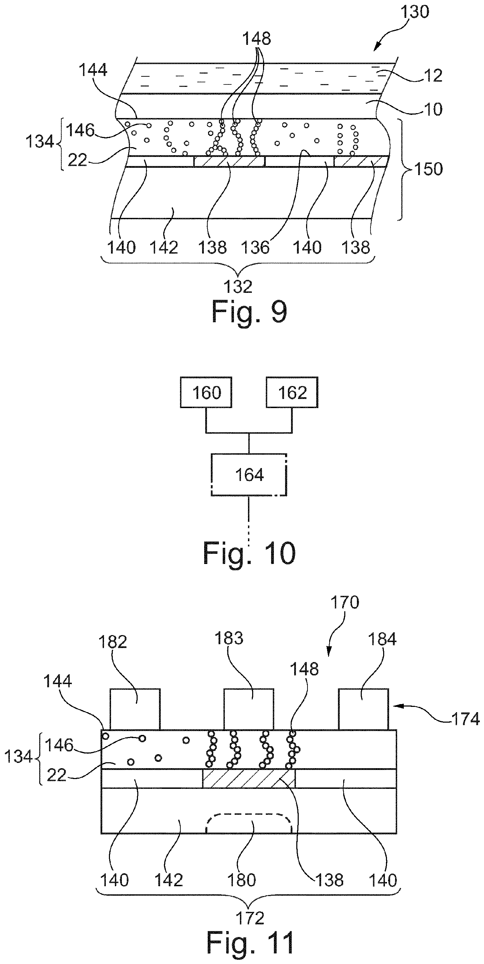

La figure 9 représente un composant 130. Ce composant est identique au composant 2 sauf que le substrat rigide 6 est remplacé par un substrat rigide 132 et le film composite 8 est remplacé par un film composite 134. Pour simplifier la figure 9, l'enveloppe 30 et les plots 32 n'ont pas été représentés.

Le substrat 132 est identique au substrat 6 sauf que sa face supérieure 136 directement en contact avec le film composite 134 n'est pas entièrement constituée par une couche uniforme d'oxyde de silicium mais, au contraire, comporte plusieurs zones conductrices 138. Dans le plan de la face 136, ces zones conductrices 138 sont séparées mécaniquement et isolées électriquement les unes des autres par des zones isolantes 140. Les zones 140 sont interposées entre les zones 138. Généralement, chaque zone conductrice 138 est complètement entourée par une zone isolante 140. De plus, dans ce mode de réalisation, les zones conductrices 138 sont réparties de façon périodique sur la face 136. Par exemple, cette répartition présente une périodicité dans au moins une direction horizontale et, le plus souvent, dans au moins deux directions horizontales non colinéaires. Par exemple, les zones 138 forment un damier.

Chaque zone 138 est réalisée dans un matériau électriquement conducteur. Par exemple, chaque zone 138 est formée d'une pastille métallique déposée sur une face plane supérieure d'une couche 142 qui s'étend horizontalement sous tout le film composite 134. Par exemple, la couche 142 est en matériau semi-conducteur tel que du silicium. L'épaisseur des pastilles métalliques est typiquement inférieure à un dixième de l'épaisseur de la couche 142. Par exemple, l'épaisseur des pastilles métalliques est inférieure ou égale à 500 nm.

De préférence, les zones conductrices 138 sont réalisées en métal inoxydable. Par exemples, elles sont réalisées dans un métal noble et, avantageusement, en platine ou en or. Ici, les zones 138 sont réalisées en platine.

Les zones 140 sont réalisées dans un matériau électriquement isolant. Ici, ces zones 140 sont des pastilles ou des bandes interposées entre les zones 138 et de même épaisseur que ces zones 138. Les zones 140 sont, par exemple, réalisées en oxyde de silicium.

Le film 134 présente une face extérieure 144 sur laquelle est directement déposée la couche fonctionnelle 10. Le film 134 est identique au film 8 sauf que les nanoparticules 24 sont remplacées par des nanoparticules 146. La largeur et la longueur du film 134 dans un plan horizontal sont supérieures à 10 ou 100 fois son épaisseur. Par largeur et longueur du film 134, on désigne ici la largeur et la longueur du rectangle horizontal de plus petite surface contenant entièrement le film 134.

Les nanoparticules 146 sont réalisées dans un matériau électriquement conducteur. De plus, de préférence, les nanoparticules sont également réalisées dans un matériau ayant une perméabilité magnétique dont la partie réelle à 10 GHz est strictement supérieure à 1 et, de préférence, supérieure à 2 ou 5. Si les nanoparticules 146 sont réalisées dans un métal qui s'oxyde alors, avantageusement, elles sont chacune enrobées d'un matériau inoxydable tel que du graphène. Cela permet d'empêcher que ces nanoparticules 146 s'oxydent. Ici, les nanoparticules 146 sont en cobalt et logées à l'intérieur d'une coquille en graphène. Plus de détails sur comment obtenir de telles nanoparticules sont donnés au chapitre II.A de l'article A1.

L'exo-diamètre des nanoparticules 146 est inférieur au tiers de l'épaisseur du film 134 et, de préférence, inférieur au dixième de cette épaisseur. À l'inverse, leur exo-diamètre est généralement supérieur à un centième et, de préférence à un cinquantième de l'épaisseur du film 134.

Dans ce mode de réalisation, les nanoparticules 146 représentent plus de 10% du volume du film 134 et, de préférence, plus de 30 %, 40 % ou 50% de ce volume. Ici, les nanoparticules 146 représentent entre 50% et 70% du volume du film 134. Généralement, le volume des nanoparticules 146 dans le film 134 reste inférieur à 90% du volume de ce film.

Dans chaque région du film 134 située au-dessus d'une zone conductrice 138, les nanoparticules 146 forment des chaînes de nanoparticules qui relient électriquement la face extérieure 144 du film 134 à cette zone conductrice 138. Pour simplifier la figure 9, seules quelques chaînes 148 verticales ont été schématiquement représentées. Chaque chaîne de nanoparticules est formée de plusieurs nanoparticules directement en contact mécanique avec au moins une autre nanoparticule de la même chaîne. Ici, les chaînes 148 verticales s'étendent de la face 144 jusqu'à la face 136. Ainsi, chacune de ces chaînes forme un chemin électriquement conducteur à travers l'épaisseur du film 134.

Par contre, le film 134 est dépourvu de chaîne horizontale de nanoparticules traversant horizontalement de part en part le film 134. Par « dépourvu », on désigne le fait que s'il existe des chaînes horizontales, alors celles-ci sont très peu nombreuses et contiennent moins de 0,5%, et typiquement moins de 0,1%, des nanoparticules du film 134.

Le film 134 présente donc une conductivité électrique anisotrope. Il est électriquement conducteur dans la direction verticale dans les régions situées au-dessus des zones 138 et électriquement isolant dans toutes les directions horizontales.

L'empilement du film 134 directement sur le substrat 132 forme ainsi un support 150 à fort contraste d'impédance. Un support à fort contraste d'impédance est un support présentant des régions à haute impédance électrique immédiatement contiguës à des régions de faible impédance électrique. Ici, les régions à faible impédance électrique sont les régions du film 134 situées juste au-dessus des zones conductrices 138 et les régions à haute impédance sont les régions du film 134 situées juste au-dessus des zones isolantes 140. Ce support 150 présente l'avantage d'être très peu sensible à l'effet de peau et donc de conserver un contraste élevé entre les régions de haute et de faible impédance électrique même pour des fréquences d'utilisation élevées, c'est-à-dire supérieures ou égales à 1 GHz. À l'inverse, un support conventionnel à fort contraste d'impédance réalisé comme décrit pour le support 150 mais en remplaçant les nanoparticules 146 par des vias ou plots métallisés verticaux qui relient la face extérieure 144 à chaque zone conductrice 138, ne présente pas un tel avantage. En effet, les vias verticaux ont typiquement un diamètre supérieur à 10 µm. Dès lors, plus la fréquence est élevée, moins les électrons situés au coeur du via participent à la conduction électrique et seuls les électrons situés dans l'épaisseur de peau sur la périphérie des vias y participent. Dès lors, la résistance électrique des vias augmente au fur et à mesure que la fréquence d'utilisation augmente. Cette résistance peut même devenir presque infinie pour des fréquences élevées. Cette augmentation de la résistance électrique des régions de faible impédance réduit le contraste d'impédance entre les différentes régions. Le déposant explique l'absence de ce problème dans le substrat 150 par le fait que la conductivité électrique entre la face 144 et les zones conductrices 138 est assurée par une multitude de chaînes 148 raccordées en parallèle entre cette face 144 et les zones conductrices 138. Or, chaque chaîne 148 forme un chemin très étroit pour le passage de l'électricité et plus étroit que l'épaisseur de peau à 1 GHz. Dès lors, la résistivité électrique des zones à faible impédance du substrat 150 ne change pas même si la fréquence d'utilisation atteint 1 GHz.

De tels supports à fort contraste d'impédance sont susceptibles de nombreuses applications industrielles en particulier en électromagnétisme et en optique. Par exemple, ces supports sont utilisés pour supporter des antennes.

Le procédé de fabrication du composant 130 va maintenant être décrit à l'aide du procédé de la figure 10. Ce procédé débute par une étape 160 d'enrobage de chaque nanoparticule 146 par une enveloppe en polymère thermoplastique. Cette étape 160 est réalisée comme décrit dans le chapitre II.B de l'article A1.

En parallèle, lors d'une étape 162, le substrat 132 est fabriqué. Cette étape 162 comporte notamment la réalisation des zones conductrices 138 et des zones isolantes 140 de la face 136. Ces différentes zones sont réalisées en mettant en oeuvre des procédés classiques de dépôt et de gravure en micro-électronique. Par exemple, la face supérieure de la couche 140 est oxydée pour créer une couche en oxyde de silicium. Ensuite, la couche d'oxyde de silicium est gravée pour former des cavités aux emplacements où doivent être réalisées les pastilles métalliques. Enfin, du platine est déposé à l'intérieur de ces cavités et la face supérieure est polie jusqu'à obtenir la face 136.

Ensuite, le procédé se poursuit par une phase 164 de réalisation du support 150 et du composant 130. La phase 164 est identique à la phase 70 sauf que le substrat 6 est remplacé par le substrat 132 et les nanoparticules 24 sont remplacées par les nanoparticules 146. Par conséquent, cette phase 164 n'est pas écrite en détail et seuls les points suivants sont soulignés.

Lors de l'étape 72, ce sont les nanoparticules 146 enrobées chacune de leur enveloppe en polymère thermoplastique qui sont dispersées à l'intérieur de la matrice 22. A ce stade-là, l'enveloppe en polymère empêche que les nanoparticules 146 entrent directement en contact électrique les unes avec les autres et cela même si la concentration de nanoparticules 146 est élevée à l'intérieur du filme 134. Ainsi, à l'issue de l'étape 72, le film 134 n'est pas électriquement conducteur ni dans la direction horizontale, ni dans la direction verticale. En particulier, même au-dessus des zones conductrices 138, le film 134 n'est pas conducteur. Cela s'explique par le fait qu'à ce stade-là, l'enveloppe en polymère des nanoparticules empêche l'apparition des chaînes 148.

Lors de l'étape 80, l'élément de chauffage 56 chauffe la matrice 22 et les enveloppes en polymère thermoplastique au-dessus de leur température de transition vitreuse respective pour les ramollir tous les deux.

L'étape 82 est ensuite réalisée lorsqu'à la fois la matrice 22 et les enveloppes en polymère sont ramollies. Le déposant estime que c'est à cause de cela que les chaînes 148 se forment pendant cette étape 82.

À l'issue de l'étape 88, en plus de la très faible rugosité de la face 144, le support 150 présente des régions avec de très forts contrastes d'impédance.

Ensuite, à l'issue de la phase 164, le procédé se poursuit par les étapes 100, 102 et 104. Pour simplifier la figure 10, ces étapes n'ont pas été représentées.

Le paragraphe situé à droite de la figure 4 dans l'article A1 indique que la conductivité verticale d'un film réalisé en suivant un procédé similaire à celui décrit ci-dessus et interposé entre des électrodes inférieure et supérieure est effectivement supérieure à celle d'un film de polystyrène sans nanoparticule (10⁻⁶ S/m contre 10⁻¹⁰ S/m) mais reste très faible ici. Ceci est erroné. Ce résultat a été expliqué à posteriori parce que dans l'article A1 l'électrode inférieure était constituée par le silicium du substrat (non oxydé en surface) et non par une couche métallique comme du platine. Les inventeurs se sont aperçus, après la publication de l'article A1, qu'en réalité, la conductivité d'un tel film composite interposé entre une électrode inférieure en platine et une électrode supérieure en or était, au contraire, très bonne et, par exemple, supérieure à 10 S/m. Dans les mêmes conditions que celles de l'article A1, il a été mesuré une conductivité verticale dans les régions situées au-dessus des zones 138 supérieure à 1 S/m. De préférence, la conductivité verticale dans les régions au-dessus des zones 138 est supérieure à 10 S/m et, avantageusement, supérieure à 10³ S/m.

La figure 11 représente un composant 170. Ce composant 170 est identique au composant 130 sauf que le substrat 132 est remplacé par un substrat 172 et que la couche fonctionnelle 10 est remplacée par une couche fonctionnelle 174. Pour simplifier la figure 11, la couche de passivation 12, l'enveloppe 30 et les plots 32 n'ont pas été représentés sur cette figure.

Le substrat 172 est identique au substrat 132 sauf que des dispositifs électriques, tels que des transistors, sont réalisés dans la couche 142. Ces dispositifs électriques sont par exemple des composants CMOS (Complementary Metal Oxide Semiconductor). Au moins, certains de ces dispositifs électriques sont raccordés électriquement à la zone conductrice 138 en dessous de laquelle ils se situent. Ici, seul un tel dispositif 180 situé en dessous de la zone conductrice 138 est représenté.

La couche fonctionnelle 174 comporte également plusieurs dispositifs électroniques. Ces dispositifs électroniques sont par exemple choisis dans le groupe composé d'une inductance, d'une antenne, d'une capacité ou d'une résistance. Ici, trois dispositifs électroniques 182 à 184 sont représentés. Les dispositifs 182 et 184 sont uniquement disposés au-dessus de zones isolantes 140 respectives. Le dispositif électronique 183 est uniquement disposé au-dessus de la zone conductrice 138.

Dans le composant 170, la région conductrice du film 134 située au-dessus de la zone 138 est utilisée pour raccorder électriquement le dispositif 183 au dispositif réalisé sur ou dans la couche 140. En même temps, les régions isolantes de ce même film 134 situées au-dessus des zones 140 sont utilisées pour isoler électriquement les dispositifs 182 et 184 du dispositif 180. Le fait d'utiliser les chaînes 148 pour établir des connexions électriques entre les dispositifs 183 et 180 présente les mêmes avantages que ceux décrits en référence à la figure 9. En particulier, une telle connexion électrique est insensible à l'effet de peau même à des fréquences supérieures ou égales à 1 GHz.

Le procédé de fabrication du composant 170 se déduit du procédé de fabrication de la figure 10. Il ne sera donc pas décrit ici en détail.

De nombreux autres modes de réalisation sont possibles. Par exemple, la face supérieure 20 du substrat 6 n'est pas nécessairement lisse. En variante, elle est structurée.Dans cette description, par « face structurée », on désigne ici le fait que des motifs, tels que des rainures ou des trous, sont gravés dans cette face à des endroits prédéterminés. La profondeur de ces motifs est supérieure à 10 nm ou 50 nm et, typiquement, supérieure à 1 µm ou 20 µm. Par exemple, avant de déposer le film 8, des rainures ou des trous sont gravés dans cette face 20. La profondeur de ces rainures ou de ces trous est typiquement supérieure à 1 µm ou 20 µm.

Le substrat 6 peut être réalisé dans d'autres matériaux que du silicium oxydé en surface. Par exemple, sa face 20 peut être réalisée en TiO₂ ou en AIN ou en Pt. Le matériau utilisé pour le corps du substrat 6 peut être un matériau minéral monocristallin ou une céramique. Il peut aussi s'agir d'un substrat métallique recouvert d'un revêtement hydrophile. Ce revêtement hydrophile peut être un revêtement non-organique tel qu'un revêtement d'oxyde et de nitrure métallique, d'oxyde conducteur, semi-conducteur ou tout métal de préférence faiblement oxydable. Il peut par exemple s'agir d'or, de platine, de silicium, d'oxyde de silicium, de nitrure de silicium, de nitrure d'aluminium, ITO(Oxyde d'indium-étain), AZO, ... etc. Ce revêtement peut aussi être un revêtement organique réalisé à partir d'un polymère hydrophile d'hydroxyde métalliques et d'amines. Par exemple, sa formule générale peut être M(OH)ₓ avec M choisi dans le groupe composé de Be, Mg, Ca, Sr, In, Ba, Ra, Al, Zn, Y et les polydopamines et l'indice « x » est typiquement un entier supérieur à un.

Enfin, le substrat 6 peut aussi être réalisé dans un matériau polymère non thermoplastique ou dans un matériau thermoplastique ayant une température de transition vitreuse très supérieure à celle du film 8 et ayant également une température de fusion très élevée, c'est-à-dire supérieure à 200°C. Par exemple, il peut s'agir du Kapton, PET (Polyethylene Terephthalate), PEN (Polyethylene Naphthalate), PI (Polyimide), PSF (Polysulfone), PPS (Polyphenylene Sulfide), PEEK (Polyetheretherketone), PA (Polyamide), PAI (Polyamide-Imide), et autres polymères similaires. Par contre, les polymères fluorés tels que le Téflon sont à éviter, car ils sont hydrophobes, ce qui limite l'adhésion du film 8 sur le substrat 6.

Le film 8 peut contenir un mélange de différentes nanoparticules. Ces différentes nanoparticules se distinguent les unes des autres, par exemple, par leur composition chimique. Ce qui a été décrit pour les nanoparticules 24 s'applique alors à chacune de ces espèces de nanoparticules.

En variante, le film 8 est structuré et ne recouvre pas la totalité de la face 20. Par exemple, le film 8 est découpé par photolithographie ou déposé d'une manière à ne recouvrir qu'une partie de la face 20. Dans ce cas, avant l'étape 90, il est possible de rajouter une étape de structuration du film 8. Le découpage du film 8 peut aussi être réalisé par arrachage de zones localisées du film 8. L'arrachage consiste à exercer dans des zones localisées sur le film 8 une force de traction supérieure à la force d'adhésion entre cette zone localisée et le substrat 6.

La couche fonctionnelle 10 peut être tout élément nécessaire au fonctionnement du composant 2. Par exemple, la couche 10 peut être structurée pour former une connexion électrique entre différentes parties du composant 2.

En variante, la couche fonctionnelle 10 n'est pas structurée. Dans ce cas, elle recouvre la totalité de la face 26 du film 8. Cette couche 10 peut être également réalisée dans de nombreux matériaux différents choisis en fonction de leur propriété physique. Par exemple, si la couche 10 doit être réalisée dans un matériau bon conducteur d'électricité, elle peut alors être réalisée en métal. La couche 10 peut aussi être réalisée dans d'autres matériaux ayant d'autres propriétés telles qu'un matériau piézoélectrique, un matériau électro-calorique ou un matériau ferromagnétique. La couche 10 peut aussi être un film composite, c'est-à-dire comporter une matrice à l'intérieur de laquelle sont dispersées des nanoparticules. Par exemple, la couche 10 est un film composite ayant les mêmes caractéristiques que celles décrites pour le film 8.

L'enveloppe protectrice 30 peut complètement envelopper l'empilement 4, c'est-à-dire recouvrir ses faces supérieure et inférieure, ainsi que ses parois verticales. Selon la fonction de l'empilement 4, l'enveloppe protectrice peut être réalisée dans d'autres matériaux. Par exemple, elle peut être réalisée en métal si le fonctionnement de l'empilement 4 est possible à l'intérieur d'une telle enveloppe protectrice en métal. Dans une variante simplifiée, l'enveloppe 30 est omise.

Tous les modes de réalisation décrits dans la demande US2003/0159608 peuvent être adaptés au procédé de la figure 4. L'adaptation consiste alors à remplacer la membrane et le tampon décrit dans cette demande US2003/0159608 par l'une des membranes précédemment décrites ci-dessus. Par exemple, plutôt que de déplacer le support 52 entre les positions rétractée et active, c'est le réservoir 40 qui se déplace entre ces positions rétractée et active.

Dans un autre mode de réalisation, la pression de la membrane 48 sur la face 26 du film 8 est obtenue en créant une dépression entre ces deux faces, plutôt qu'en augmentant la pression à l'intérieur de la cavité 41. Dans ce mode de réalisation, le fluide à l'intérieur de la cavité 41 n'est pas comprimé. Dans une autre variante de l'appareil 38, le fluide utilisé pour pousser la membrane 48 n'est pas un gaz mais un liquide.

La membrane 48 peut être montée sur les bords inférieurs des parois 46 comme décrit pour la membrane 110. A l'inverse, la membrane 110 peut être utilisée comme décrit dans le cas de la membrane 48. Dans ce dernier cas, la membrane 110 n'est pas fixée, sans aucun degré de liberté, sur le réservoir 40.

La membrane 48 peut être réalisée en métal, dans ce cas, la membrane 48 est une fine feuille de métal, dont l'épaisseur est typiquement inférieure à 500 µm ou 300 µm ou 100 µm.

Pour certaines applications de grande dimension, la surface de la face avant 50 peut dépasser 1 m² ou 2 m². Tout ce qui est a été décrit précédemment marche encore.

La membrane 110 peut comporter plusieurs tampons 114 séparés mécaniquement les uns des autres et fixés sur la même feuille 112. Ces tampons peuvent être beaucoup plus petits que la feuille 112.

Plusieurs couches intermédiaires différentes peuvent être déposées entre la couche fonctionnelle 10 et la couche de passivation 12. Une ou plusieurs de ces couches intermédiaires peuvent être des films composites similaires au film 8. Dans ce cas, ces films composites supplémentaires sont déposés comme décrits pour le film 8.

En variante, l'étape 92 de structuration de la couche fonctionnelle 10 est omise.

Dans une autre variante, après l'étape 92 ou après l'étape 94 ou après une autre étape ultérieure de fabrication du composant 2, le procédé comporte une étape de découpage de l'empilement 4 en plusieurs morceaux mécaniquement indépendants les uns des autres. Chacun de ces morceaux est alors incorporé dans un composant 2 respectif mécaniquement indépendant des autres. On dit alors qu'il s'agit d'un procédé collectif de fabrication de ces différents morceaux d'empilement comportant chacun un film composite déposé sur un substrat.

Le passage par une pression intermédiaire avant d'appliquer une pression plus élevée peut être omis. Ceci est notamment le cas si la pression finale utilisée pour écraser la face 26 est inférieure à 10 bars (1 MPa). La pression utilisée pour écraser la face 26 est strictement supérieure à 1 bar et, généralement, supérieure à 6, 10 ou 30 bars. Elle est également généralement inférieure à 500 bars.

On peut aussi commencer à chauffer le film 8 avant de mettre la face avant 50 de la membrane 48 en contact avec la face 26 du film 8.

Si le film 8 présente de fortes différences d'épaisseur à l'issue de l'étape 72, il est possible de réitérer plusieurs fois les étapes 74 à 88 sur la face 26 du même film 8 avec la même membrane 48 ou, au contraire, en utilisant lors de chaque itération de ces étapes 74 à 88 des membranes différentes. Par exemple, lors d'une première itération des étapes 74 à 88, une première membrane est utilisée. Cette première membrane est plus solide que celles qui seront utilisées ultérieurement, et présente, par exemple, une face avant plus rugueuse que celle des autres membranes utilisées. Dans ce cas, cette première membrane est surtout utilisée pour rattraper les différences d'épaisseur du film 8. Ensuite, lors d'une seconde itération des étapes 74 à 88, une seconde membrane est utilisée. Cette seconde membrane présente une face avant nettement moins rugueuse que la face avant de la première membrane. Dans ce cas, la seconde itération des étapes 74 à 88 permet surtout de diminuer la rugosité de la face 26.

En variante, les nanoparticules 146 sont réalisées en matériau électriquement conducteur ayant une perméabilité magnétique dont la partie réelle à 10 GHz est égale à 1.

D'autres métaux que le platine peuvent être utilisés pour réaliser les zones conductrices 138. Par exemple, l'or est également un bon candidat.

Les zones conductrices 138 peuvent également être réalisées différemment. Par exemple, ces zones peuvent être réalisées par implantation d'ions ou dopage localisé de la face supérieure de la couche 142.

Les zones isolantes 140 peuvent être réalisées dans d'autres matériaux électriquement isolant. Par exemple, elles peuvent être réalisées en Si₃N₄.

Pour fabriquer un support à fort contraste d'impédance, il n'est pas nécessaire que la face avant de la membrane 48 ou du tampon 114 soit lisse. Au contraire, en variante, la face avant de la membrane ou du tampon est structurée. Dans ces conditions, lors de l'étape 82, la membrane ou le tampon imprime en relief les motifs gravés dans la face 144. Autrement dit, la face du film composite sur laquelle est déposée la couche fonctionnelle est structurée au lieu d'être lisse, c'est-à-dire qu'au moins un relief est imprimé par tamponnage dans cette face du film.

Les modes de réalisation décrits jusqu'à présent l'ont été dans le cas particulier de films composites comportant seulement des nanoparticules. Toutefois, tout ce qui a été décrit s'applique aussi à des films composites dans lesquels les particules dispersées à l'intérieur de la matrice ont un exo-diamètre pouvant atteindre jusqu'à 10 µm ou 30 µm ou 100 µm. Dans ce cas, l'épaisseur du film est adaptée pour qu'elle soit strictement supérieure, et de préférence deux ou trois fois supérieure, à l'exo-diamètre des plus grosses particules de ce film. Lorsque l'exo-diamètre EDₘₐₓ des plus grosses particules dépasse 1 µm ou 10 µm, il peut être avantageux de conserver l'exo-diamètre des particules moins grosses supérieur à EDₘₐₓ/100 ou EDₘₐₓ/10 pour limiter l'étendue de la répartition des tailles des particules.

## Revendications

1. Procédé de fabrication d'un composant comportant un empilement d'une couche fonctionnelle sur un film composite, le film composite comportant une matrice (22) en polymère thermoplastique à l'intérieur de laquelle sont dispersées des particules (24 ; 146) conférant à ce film composite des propriétés physiques indispensables au fonctionnement du composant, l'exo-diamètre des particules étant compris entre 1 nm et 100 µm et le volume des particules à l'intérieur du film composite représentant plus de 1 % du volume de ce film composite, ce procédé comportant :
a) le dépôt (72) du film composite (8 ; 134) directement sur un substrat rigide (6 ; 142, 138, 140) dont l'épaisseur est strictement supérieure à l'épaisseur du film, le film composite présentant alors une face extérieure tournée du côté opposé au substrat, à ce stade, la température du film composite étant inférieure à sa température de transition vitreuse, de sorte que ce film est dit « dur », puis
b) le dépôt (90) de la couche fonctionnelle (10 ; 174) directement sur la face extérieure du film composite,
**caractérisé en ce que**, entre les étapes a) et b), le procédé comporte :
1) le chauffage (80) du film composite (8 ; 134) pour que sa température dépasse la température de transition vitreuse de sa matrice de manière à le ramollir,
2) lorsque le film composite (8 ; 134) est ramolli, l'écrasement (82) de la face extérieure du film composite par une face lisse (20 ; 120) directement en appui sur toute cette face extérieure, cette face lisse faisant partie de la face avant d'une membrane flexible (48 ; 110) dont toute la face arrière, située du côté opposé à la face avant, est poussée contre le film composite par un fluide, puis
3) le refroidissement (84) du film composite en dessous de la température de transition vitreuse pour le durcir à nouveau, puis
4) le retrait (88) de la membrane (48 ; 110) pour séparer mécaniquement sa face avant de la face extérieure du film composite.

2. Procédé selon la revendication 1, dans lequel le procédé comporte, après les étapes a) et b), la réalisation (104) d'une enveloppe protectrice autour de l'empilement pour le protéger de l'environnement extérieur.

3. Procédé selon la revendication 1 ou 2, dans lequel, lors de l'étape 2, la face lisse présente uniquement des aspérités aléatoirement réparties sur toute sa surface et la rugosité RMS (« Root Mean Square ») de cette face lisse est strictement inférieure à l'exo-diamètre moyen des particules dispersées dans le film composite.

4. Procédé selon la revendication 3, dans lequel lors de l'étape 2, la rugosité RMS de la face lisse est inférieure à 100 nm ou 10 nm.

5. Procédé selon l'une quelconque des revendications précédentes, dans lequel la face avant de la membrane flexible est strictement supérieure à 20 cm².

6. Procédé selon l'une quelconque des revendications précédentes, dans lequel le procédé comporte la structuration (92) de la couche fonctionnelle pour lui donner une forme prédéfinie de sorte que la couche fonctionnelle structurée recouvre alors seulement une partie de la face extérieure du film composite.

7. Procédé selon l'une quelconque des revendications précédentes, dans lequel :
- avant l'étape a), le procédé comporte :
• la réalisation (162) d'au moins une zone conductrice et d'au moins une zone isolante sur la face du substrat rigide sur laquelle le film composite est déposé lors de l'étape a), chaque zone conductrice étant réalisée dans un matériau électriquement conducteur et chaque zone isolante étant réalisée dans un matériau électriquement isolant, et
• la fourniture de particules conductrices, chaque particule conductrice étant réalisée en matériau électriquement conducteur et présentant un exo-diamètre inférieur au tiers de l'épaisseur du film après que ce film ait été écrasé lors de l'opération 2) et l'indice de forme de chaque particule conductrice est compris entre 0,5 et 1,5 et chaque particule conductrice est enrobée par sa propre enveloppe en polymère thermoplastique,
- lors de l'étape a), le film composite déposé comprend entre 10 % et 90 % en volume de particules conductrices, chaque particule étant à ce stade isolée électriquement des autres particules conductrices par une enveloppe en polymère thermoplastique, et
- lors de l'opération 1), le film composite est chauffé au-delà des températures de transition vitreuse de sa matrice et de l'enveloppe des particules pour ramollir à la fois le film composite et les enveloppes des particules.

## Patentansprüche

1. Verfahren zur Herstellung einer Komponente, die eine Stapelschicht einer funktionellen Schicht auf einer Verbundfolie aufweist, wobei die Verbundfolie eine Matrix (22) aus thermoplastischem Polymer aufweist, in der Teilchen (24; 146) dispergiert werden, die dieser Verbundfolie physikalische Eigenschaften verleihen, die für das Funktionieren der Komponente unerlässlich sind, wobei der Außendurchmesser der Teilchen zwischen 1 nm und 100 µm liegt und das Volumen der Teilchen im Inneren der Verbundfolie mehr als 1 % des Volumens dieser Verbundfolie darstellt, wobei das Verfahren Folgendes aufweist:
a) das Aufbringen (72) der Verbundfolie (8; 134) direkt auf einem starren Substrat (6; 142, 138, 140), dessen Dicke deutlich größer als die Dicke der Folie ist, wobei die Verbundfolie dann eine Außenfläche aufweist, die dem Substrat abgewandt ist, wobei die Temperatur der Verbundfolie in diesem Stadium niedriger als ihre Glasübergangstemperatur ist, so dass der Film als "hart" bezeichnet wird, und dann
b) das Aufbringen (90) der funktionellen Schicht (10; 174) direkt auf die Außenfläche der Verbundfolie,
**dadurch gekennzeichnet, dass** das Verfahren zwischen den Schritten a) und b) Folgendes aufweist:
1) das Erhitzen (80) der Verbundfolie (8; 134), damit ihre Temperatur die Glasübergangstemperatur ihrer Matrix übersteigt, um sie zu erweichen,
2) wenn die Verbundfolie (8; 134) erweicht ist, das Quetschen (82) der Außenfläche der Verbundfolie durch eine glatte Fläche (20; 120) direkt in Auflage auf diese gesamte Außenfläche, wobei die glatte Fläche Teil der Vorderseite einer flexiblen Membran (48; 110) ist, deren ganze Rückseite, die der Vorderseite gegenüberliegt, durch eine Flüssigkeit gegen die Verbundfolie gedrückt wird, und dann
3) das Abkühlen (84) der Verbundfolie unter die Glasübergangstemperatur, um sie wieder auszuhärten, und dann
4) das Entfernen (88) der Membran (48; 110), um ihre Vorderseite von der Außenfläche der Verbundfolie mechanisch zu trennen.

2. Verfahren nach Anspruch 1, wobei das Verfahren nach den Schritten a) und b) das Erstellen (104) einer Schutzhülle um die Stapelschicht aufweist, um sie vor der äußeren Umgebung zu schützen.

3. Verfahren nach Anspruch 1 oder 2, wobei die glatte Fläche während des Schrittes 2 nur Unebenheiten aufweist, die zufällig auf ihrer gesamten Oberfläche verteilt werden, und die RMS-Rauheit ("Root Mean Square") dieser glatten Fläche streng unter dem mittleren Außendurchmesser der Teilchen liegt, die in der Verbundfolie dispergiert werden.

4. Verfahren nach Anspruch 3, wobei während des Schrittes 2 die RMS-Rauheit der glatten Fläche niedriger als 100 nm oder 10 nm ist.

5. Verfahren nach einem der vorhergehenden Ansprüche, wobei die Vorderseite der flexiblen Membran deutlich größer als 20 cm² ist.

6. Verfahren nach einem der vorhergehenden Ansprüche, wobei das Verfahren das Strukturieren (92) der funktionellen Schicht aufweist, um ihr eine vorbestimmte Form derart zu verleihen, dass die strukturierte funktionelle Schicht dann nur einen Teil der Außenfläche der Verbundfolie bedeckt.

7. Verfahren nach einem der vorhergehenden Ansprüche, wobei:
- das Verfahren vor dem Schritt a) Folgendes aufweist:
• das Erstellen (162) von mindestens einem leitenden Bereich und von mindestens einem isolierenden Bereich auf der Fläche des starren Substrats, auf der die Verbundfolie während des Schrittes a) aufgebracht wird, wobei jeder leitende Bereich aus einem elektrisch leitenden Material erstellt wird und jeder isolierende Bereich aus einem elektrisch isolierenden Material erstellt wird, und
• das Bereitstellen von leitenden Teilchen, wobei jedes leitende Teilchen aus elektrisch leitendem Material erstellt wird und einen Außendurchmesser aufweist, der kleiner als ein Drittel der Dicke der Folie ist, nachdem diese Folie während des Schrittes 2) gequetscht worden ist, und das Aspektverhältnis von jedem leitenden Teilchen zwischen 0,5 und 1,5 beträgt und jedes leitende Teilchen durch seine eigene Umhüllung aus thermoplastischem Polymer umhüllt ist,
- die aufgebrachte Verbundfolie während des Schrittes a) zwischen 10 und 90 Vol.-% an leitenden Teilchen aufweist, wobei jedes Teilchen in diesem Zustand von den anderen leitenden Teilchen durch eine Umhüllung aus thermoplastischem Polymer elektrisch isoliert ist, und
- die Verbundfolie während des Vorgangs 1) über die Glasübergangstemperaturen ihrer Matrix und der Umhüllung der Teilchen erhitzt wird, um gleichzeitig die Verbundfolie und die Umhüllungen der Teilchen zu erweichen.

## Claims

1. Process for the manufacture of a component comprising a stack of a functional layer on a composite film, the composite film comprising a matrix (22) made of thermoplastic polymer inside which are dispersed particles (24; 146) conferring, on this composite film, physical properties essential to the operation of the component, the exodiameter of the particles being between 1 nm and 100 µm and the volume of the particles inside the composite film representing more than 1% of the volume of this composite film, this process comprising:
a) the deposition (72) of the composite film (8; 134) directly on a rigid substrate (6; 142, 138, 140), the thickness of which is strictly greater than the thickness of the film, the composite film then exhibiting an external face turned the opposite way from the substrate, at this stage, the temperature of the composite film being less than its glass transition temperature, so that this film is referred to as "hard", then b) the deposition (90) of the functional layer (10; 174) directly on the external face of the composite film,
**characterized in that**, between stages a) and b), the process comprises:
1) the heating (80) of the composite film (8; 134) in order for its temperature to exceed the glass transition temperature of its matrix, so as to soften it,
2) when the composite film (8; 134) is softened, the flattening (82) of the external face of the composite film by a smooth face (20; 120) resting directly over the whole of this external face, this smooth face forming part of the front face of a flexible membrane (48; 110), the whole of the rear face of which, located on the side opposite the front face, is pushed against the composite film by a fluid, then
3) the cooling (84) of the composite film below the glass transition temperature in order to again harden it, then
4) the withdrawal (88) of the membrane (48; 110) in order to mechanically separate its front face from the external face of the composite film.

2. Process according to Claim 1, in which the process comprises, after stages a) and b), the preparation (104) of a protective casing around the stack in order to protect it from the external environment.

3. Process according to Claim 1 or 2, in which, during stage 2), the smooth face exhibits only unevennesses randomly distributed over the whole of its surface and the RMS (Root Mean Square) roughness of this smooth face is strictly less than the mean exodiameter of the particles dispersed in the composite film.

4. Process according to Claim 3, in which, during stage 2), the RMS roughness of the smooth face is less than 100 nm or 10 nm.

5. Process according to any one of the preceding claims, in which the front face of the flexible membrane is strictly greater than 20 cm².

6. Process according to any one of the preceding claims, in which the process comprises the structuring (92) of the functional layer in order to give it a predefined shape so that the structured functional layer then covers only a portion of the external face of the composite film.

7. Process according to any one of the preceding claims, in which:
- before stage a), the process comprises:
• the production (162) of at least one conducting zone and of at least one insulating zone on the face of the rigid substrate on which the composite film is deposited during stage a), each conducting zone being made of an electrically conducting material and each insulating zone being made of an electrically insulating material, and
• the provision of conducting particles, each conducting particle being made of electrically conducting material and exhibiting an exodiameter less than one third of the thickness of the film after this film has been flattened during the operation 2), and the shape index of each conducting particle is between 0.5 and 1.5 and each conducting particle is coated with its own casing made of thermoplastic polymer,
- during stage a), the composite film deposited comprises between 10% and 90% by volume of conducting particles, each particle being at this stage electrically insulated from the other conducting particles by a casing made of thermoplastic polymer, and
- during the operation 1), the composite film is heated above the glass transition temperatures of its matrix and of the casing of the particles in order to soften both the composite film and the casings of the particles.
